# EUROPEAN PATENT SPECIFICATION

(11) **EP 3 678 447 B1**
(45) Date of publication and mention of the grant of the patent: **10.11.2021**
(21) Application number: 17928882.4
(22) Date of filing: 18.10.2017
(51) Int. Cl.: H04W 8/24, H04W 28/18, H04W 8/00, H04W 74/00

(54) **METHOD FOR RESTRICTING CAPABILITY OF TERMINAL AND NETWORK DEVICE, TERMINAL DEVICE, AND NETWORK DEVICE**
VERFAHREN ZUR EINSCHRÄNKUNG DER FÄHIGKEIT EINES ENDGERÄTS UND NETZWERKVORRICHTUNG, ENDGERÄT UND NETZWERKVORRICHTUNG
PROCÉDÉ DE RESTRICTION DE CAPACITÉ D'UN DISPOSITIF TERMINAL ET D'UN DISPOSITIF DE RÉSEAU, DISPOSITIF TERMINAL, ET DISPOSITIF RÉSEAU

(43) Date of publication of application: 08.07.2020
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Manitz Finsterwald Patent- und Rechtsanwaltspartnerschaft mbB
(86) International application number: PCT/CN2017/106759
(87) International publication number: WO 2019/075676

(56) References cited:
- CN-A- 103 581 226
- CN-A- 103 581 236
- CN-A- 107 046 728
- US-A1- 2014 219 170
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD ; TECHNICAL SPECIFICATION ; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.7.1, 29 September 2017 (2017-09-29), pages 1-642, XP051337498, [retrieved on 2017-09-29]
- ZTE CORPORATION: "Consideration on the Temporary Capability Restriction", 3GPP DRAFT; R2-1708153 CONSIDERATION ON THE TEMPORARY CAPABILITY RESTRICTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Berlin, Germany; 20170821 - 20170825 20 August 2017 (2017-08-20), XP051318056, Retrieved from the Internet: URL:http://www.3gpp.org/ftp/Meetings_3GPP_ SYNC/RAN2/Docs/ [retrieved on 2017-08-20]
- SAMSUNG: "Network control of UE capability suspension", 3GPP DRAFT; R2-1709483 ON NETWORK CONTROL OF UE CAPABILITY SUSPENSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Berlin, Germany; 20170821 - 20170825 20 August 2017 (2017-08-20), XP051319208, Retrieved from the Internet: URL:http://www.3gpp.org/ftp/Meetings_3GPP_ SYNC/RAN2/Docs/ [retrieved on 2017-08-20]

## Description

### TECHNICAL FIELD

Embodiments of the present disclosure generally relate to information process technologies, and more particularly, to a terminal device and network device limiting method, a terminal device, a network device, and a network device.

### BACKGROUND

Currently, with the pursuit of speed, low latency, high-speed mobility, energy efficiency, and the diversity and complexity of services in the future, the 3GPP International Standards Organization has started to develop 5G. In the early deployment of NR, complete NR coverage is difficult to obtain, so typical network coverage is wide-area LTE coverage and NR island coverage mode.

The terminal device capability acquisition in NR is based on the UE request and reporting. From the perspective of the terminal device, when the terminal device encounters interference from other bands, overheating, battery consumption, and so on, the terminal device temporarily changes its capabilities and reports to the base station, requiring the base station to use the restricted terminal device capability information. Reducing the capability of the terminal device can alleviate the above problems, which is beneficial and meaningful to the UE. However, if the terminal device autonomously modifies the capability information, it may cause problems such as device instability, unpredictable UE behavior, additional signaling load, and user complaints.

3GPP document R2-1708153 discusses the procedure about how the temporary capability restriction should be performed for both SA and NSA NR.

### SUMMARY

It is an object of the invention to provide a terminal device and network device capability limiting method, a terminal device and a network device with which the above mentioned problems can be solved. This object is solved by the subject matter of the independent claims.

An embodiment of the present disclosure provides a terminal device capability limiting method, applied to a terminal device and including:
when the terminal device needs initiate an RRC connection and needs to limit a capability, sending a MSG3 in which a request for a limited capability of the terminal device is carried to a network side;
receiving a MSG4 in which an instruction from the network side that allows the terminal device to use the limited capability is carried; and
sending a MSG5 in which information about at least one type of limited capability is carried to the network side based on the instruction that allows the terminal device to use the limited capability.

An embodiment of the present disclosure provides a terminal device capability limiting method, applied to a network device and including:
receiving from a terminal device a MSG3 in which a request for a limited capability;
sending to the terminal device a MSG4 in which an instruction that allows the terminal device to use the limited capability is carried; and
receiving from the terminal a MSG5 in which information about at least one type of limited capability is carried.

An embodiment of the present disclosure provides a terminal device, including units to perform the above method.

In the technical solutions of embodiments of the present disclosure, the terminal device requests to use temporarily restricted UE capability information, and then reports the temporarily restricted capability information to the network side. Thus, embodiments of the present disclosure can achieve power conservation and interference avoidance for the terminal device.

### BRIEF DESCRIPTION OF THE DRAWINGS

FIG. 1 is a schematic flowchart 1 of a terminal device capability limiting method according to an embodiment of the present disclosure.
FIG. 2 is a schematic diagram of an information format according to an example not being part of the invention.
FIG. 3 is a schematic flowchart 2 of a terminal device capability limiting method according to an embodiment of the present disclosure.
FIG. 4 is a schematic flowchart 3 of a terminal device capability limiting method according to an example not being part of the invention.
FIG. 5 is a schematic flowchart 4 of a terminal device capability limiting method according to an embodiment of the present disclosure.
FIG. 6 is a schematic structural diagram of a terminal device according to an example not being part of the invention.
FIG. 7 is a schematic structural diagram of a network device according to an example not being part of the invention.
FIG. 8 is a schematic diagram of a hardware architecture according to an example not being part of the invention.

### DETAILED DESCRIPTION

In order to understand the features and technical contents of the embodiments of the present disclosure in more detail, embodiments of the present disclosure will be described in detail with reference to the accompanying drawings. The drawings are provided for illustration only and are not intended to limit the embodiments of the present disclosure.

### First Embodiment

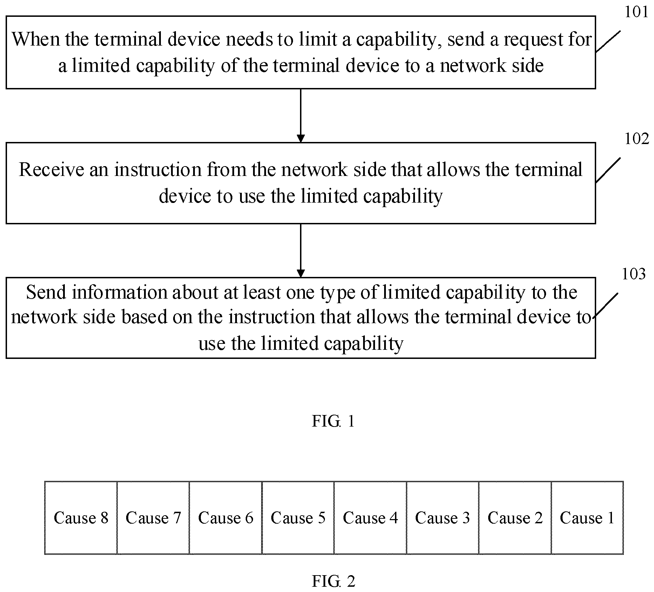

An embodiment of the invention provides a terminal device capability limiting method, which is applied to a terminal device. As shown in FIG. 1, the method includes:

In step 101, when the terminal device needs to limit a capability, a request for a limited capability of the terminal device is sent to a network side.

In step 102, an instruction that allows the terminal device to use the limited capability is received from the network side.

In step 103, information about at least one type of limited capability is sent to the network side based on the instruction that allows the terminal device to use the limited capability.

According to embodiments, the step 101 of sending the request for the limited capability of the terminal device to the network side may include multiple implementation manners. In the invention, the request for the limited capability of the terminal device is added in MSG3. Alternatively, and not being part of the invention.

the request for the limited capability of the terminal device may be carried in MSG5 or in a Media Access Control (MAC) layer Control Element (CE).

Further, when sending the request for the limited capability, information regarding a cause for the limited capability of the terminal device may also be sent to the network side. For example, the information regarding the cause for the limited capability of the terminal device may be carried in any one of the MSG3 or MSG5, and MAC CE, the latter however not part of the invention.

When setting the cause information for the limited capability in MSG3 or MSG5, a corresponding cause value may be set in a designated field. For example, a cause value of 1 can correspond to insufficient power, and the like. Of course, there can be other cause values and corresponding cause information, and embodiments of the present disclosure do not list all examples.

A data area containing at least one data bit may be set in the MAC CE. Each data bit in the at least one data bit corresponds to information regarding one cause for the limited capability of the terminal device. Based on information regarding a cause for a current limited capability of the terminal device, a target data bit in the data area is set as a target value. That is, the corresponding target data bit is determined based on the cause information, and then the target data bit is set to the corresponding target value. The target value can be set according to actual situations. For example, if the target bit is set to 1, it represents the corresponding cause information.

For example, as shown in FIG. 2, a corresponding logical channel ID, i.e., an LCID, is defined in the MAC CE. Each bit of the MAC CE corresponds to a cause for a UE to temporarily limit the UE's capability. For example, the first bit (the first bit is in the low order position) indicates insufficient power, the second bit indicates the cause of interference, and the third bit indicates overheating, and so on. If the corresponding cause triggers the UE to send the request, the corresponding bit is set as 1.

Further, in step 103, sending information about at least one type of limited capability to the network side may include various manners:

Manner 1: list information composed of at least one limited capability is carried in MSG5.

That is, a blacklist method is used to report multiple unused capabilities to the network side.

Manner 2: information about at least one temporarily limited capability of the terminal device is reported to the network side.

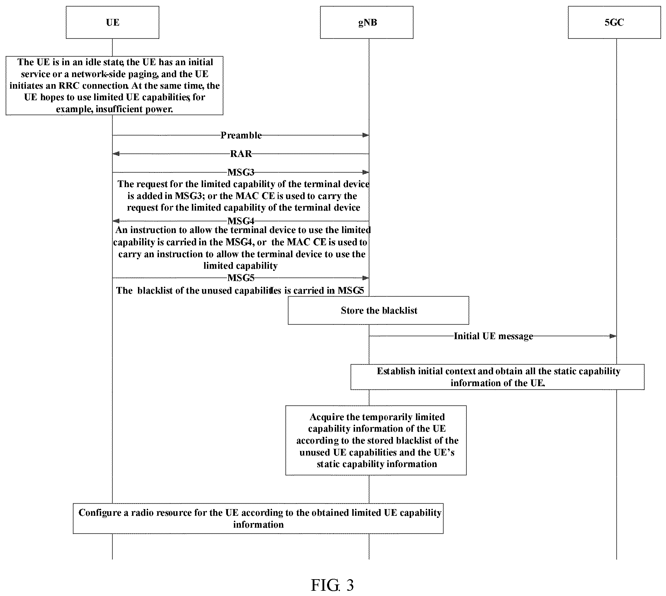

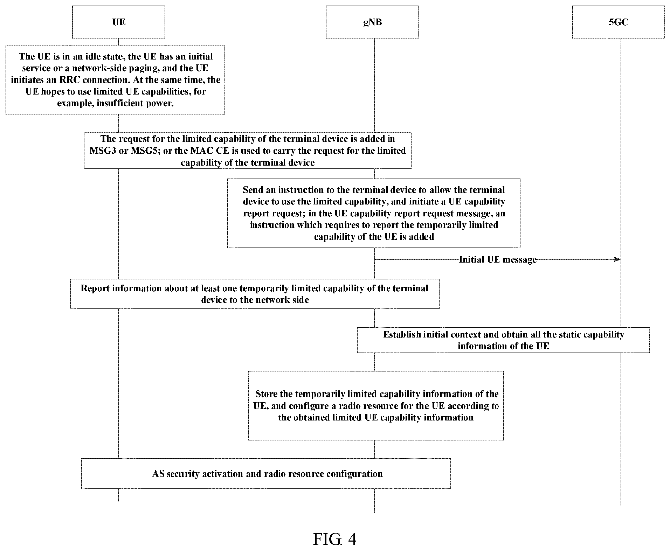

The following provides a detailed description of the solutions provided according to examples not entirely being part of the invention with reference to two scenarios provided in FIGs. 3 and 4.

First, referring to FIG. 3, a blacklist-based approach is provided.

The UE is in an idle state, the UE has an initial service or a network-side paging, and the UE initiates an RRC connection. At the same time, the UE hopes to use limited UE capabilities, for example, insufficient power. Thereafter, the UE (i.e., the terminal device) sends an interactive preamble sequence to the network-side base station (gNB), and receives a Random Access Response (RAR) sent by the gNB.

The UE adds the request for the limited capability of the terminal device in MSG3; or alternatively and not being part of the invention uses the MAC CE to carry the request for the limited capability of the terminal device. According to embodiments, the cause information that triggers the limited capability of the terminal device may also be carried, such as interference, insufficient power, overheating, and so on.

In the invention, the network side carries an instruction to allow the terminal device to use the limited capability in the MSG4, alternatively and not being part of the invention, the network side may use the MAC CE to carry an instruction to allow the terminal device to use the limited capability.

The UE carries list information composed of at least one limited capability in MSG5, that is, a blacklist of unused capabilities.

The remaining part of this flowchart is not part of the invention. The base station stores the blacklist of the unused capabilities, and then performs the initial UE message and establishing of the initial context, and obtains all the static capability information of the UE.

The base station acquires the temporarily limited capability information of the UE according to the stored blacklist of the unused UE capabilities and the UE's static capability information.

The base station configures a radio resource for the UE according to the obtained limited UE capability information.

If the blacklist reporting method is used, during the movement of the UE, the previous base station forwards the blacklist of the unused UE capabilities and the UE static capability information to the target base station.

FIG. 4 shows another scenario not being part of the invention which is based on a temporarily limited capability reported by the UE.

The UE is in an idle state, the UE has an initial service or a network-side paging, and the UE initiates an RRC connection. At the same time, the UE wants to use limited UE capabilities, such as insufficient power.

The UE adds the request for the limited capability of the terminal device in MSG3 or MSG5, or uses the MAC CE to carry the request for the limited capability of the terminal device. According to embodiments, a cause that triggers the UE to use the temporarily limited capability of the UE may also be carried, such as interference, insufficient power, overheating, and so on. If the MAC CE is used, the MAC CE itself indicates a request for the use of a limited UE capability, and a corresponding logical channel ID, i.e., an LCID, is defined for the MAC CE. Each bit of the MAC CE corresponds to a cause that triggers the UE to use the temporarily limited UE capability. For example, the first bit (the first bit is in the low order position) indicates insufficient power, the second bit indicates the cause of interference, and the third bit indicates overheating, and so on. If the corresponding cause triggers the UE to send the request, the corresponding bit is set as 1.

The base station sends an instruction to the terminal device to allow the terminal device to use the limited capability, and initiates a UE capability report request. In the UE capability report request message, the base station adds an instruction which requires to report the temporarily limited capability of the UE. Then, the initial UE message.

The UE reports information about at least one temporarily limited capability of the terminal device to the network side. Thereafter, the base station performs initial context establishment and obtains all the static capability information of the UE.

The base station stores the temporarily limited capability information of the UE, and configures a radio resource for the UE according to the obtained limited UE capability information. After that, the process of security activation and radio resource configuration is performed between the base station and the UE.

In the technical solutions of embodiments of the present disclosure, the terminal device requests to use temporarily restricted UE capability information, and then reports the temporarily restricted capability information to the network side, so that subsequent processing is triggered on the network side. Thus, embodiments of the present disclosure can achieve power conservation and interference avoidance for the terminal device.

### Second Embodiment

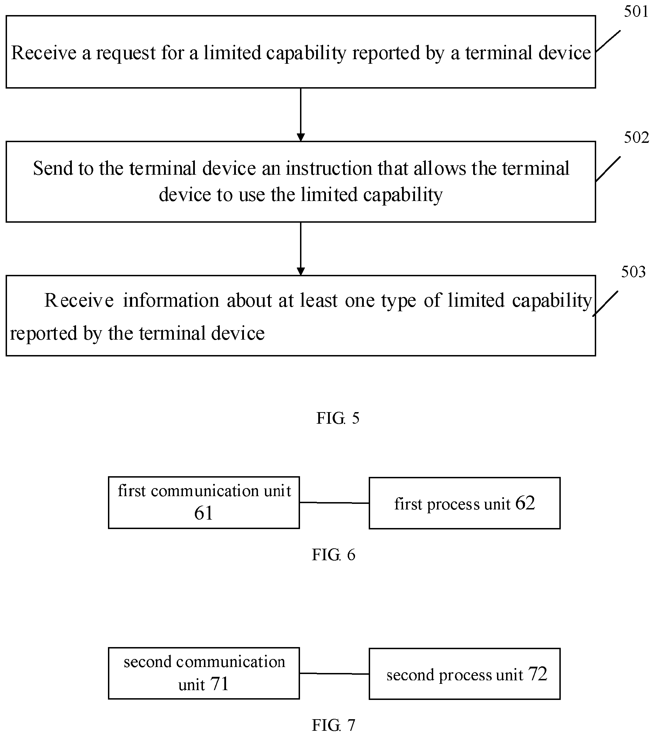

An embodiment of the present invention provides a terminal device capability limiting method, which is applied to a network device. As shown in FIG. 5, the method includes:

In step 501, when a terminal device needs to limit a capability, a request for a limited capability reported by the terminal device is received.

In step 502, an instruction that allows the terminal device to use the limited capability is sent to the terminal device.

In step 503, information about at least one type of limited capability reported by the terminal device.

In the embodiment, step 501 of receiving the request for the limited capability reported by the terminal device includes:
obtaining the request for the limited capability of the terminal device in MSG3
   alternatively and not being part of the invention,
obtaining the request for the limited capability of the terminal device in MSG5 or a

### Media Access Control (MAC) layer Control Element (CE).

Further, the method includes: obtaining information regarding a cause for the limited capability of the terminal device in any one of the MSG3 or MSG5, alternatively and not being part of the invention, in MAC CE.

When setting the cause information for the limited capability in MSG3 or MSG5, a corresponding cause value may be set in a designated field. For example, a cause value of 1 can correspond to insufficient power, and the like. Of course, there can be other cause values and corresponding cause information, and embodiments of the present disclosure do not list all examples.

A data area containing at least one data bit may be detected in the MAC CE. Each data bit in the at least one data bit corresponds to information regarding one cause for the limited capability of the terminal device. Based on that a target data bit in the data area is set as a target value, a cause why a capability of the terminal device is limited is determined.

For example, as shown in FIG. 2, a corresponding logical channel ID, i.e., an LCID, is defined in the MAC CE. Each bit of the MAC CE corresponds to a cause for a UE to temporarily limit the UE's capability. For example, the first bit (the first bit is in the low order position) indicates insufficient power, the second bit indicates the cause of interference, and the third bit indicates overheating, and so on. If the corresponding cause triggers the UE to send the request, the corresponding bit is set as 1.

Sending to the terminal device the instruction that allows the terminal device to use the limited capability may include various manners. For example, the instruction that allows the terminal device to use the limited capability is carried in MSG4, and MSG4 is sent to the terminal device.

Alternatively, as another example, the instruction that allows the terminal device to use the limited capability is carried in the MAC CE and the MAC CE is sent to the terminal device.

The method may further include: storing information about at least one type of limited capability reported by the terminal device; and configuring a corresponding radio resource for the terminal device based on the information about the at least one type of limited capability.

Further, if the terminal device moves to a coverage area of a new base station, the information about at least one type of limited capability of the terminal device is sent to the new base station.

As the terminal device moves and enters the coverage of a new base station, a handover procedure may occur. At this time, information about at least one type of limited capability of the terminal device is directly sent to the new base station, which can reduce signaling interaction between the new base station and the terminal device to exchange capability information again to improve processing efficiency.

The following provides a detailed description of the solutions provided according to embodiments of the present disclosure with reference to two scenarios provided in FIGs. 3 and 4.

First, referring to FIG. 3, a blacklist-based approach is provided.

The UE is in an idle state, the UE has an initial service or a network-side paging, and the UE initiates an RRC connection. At the same time, the UE hopes to use limited UE capabilities, for example, insufficient power. Thereafter, the UE (i.e., the terminal device) sends an interactive preamble sequence to the network-side base station (gNB), and receives a Random Access Response (RAR) sent by the gNB.

The UE adds the request for the limited capability of the terminal device in MSG3; or alternatively and not being part of the invention, uses the MAC CE to carry the request for the limited capability of the terminal device. According to embodiments, the cause information that triggers the limited capability of the terminal device may also be carried, such as interference, insufficient power, overheating, and so on.

The network side carries an instruction to allow the terminal device to use the limited capability in the MSG4, or alternatively and not being part of the invention, the network side uses the MAC CE to carry an instruction to allow the terminal device to use the limited capability.

The UE carries list information composed of at least one limited capability in MSG5, that is, a blacklist of unused capabilities.

The base station stores the blacklist of the unused capabilities, and then interacts with the 5GC (5G Core, 5G core network), including the initial UE message and the establishment of the initial context and the processing of obtaining all static capability information of the UE.

The base station acquires the temporarily limited capability information of the UE according to the stored blacklist of the unused UE capabilities and the UE's static capability information.

The base station configures a radio resource for the UE according to the obtained limited UE capability information.

If the blacklist reporting method is used, during the movement of the UE, the previous base station forwards the blacklist of the unused UE capabilities and the UE static capability information to the target base station.

FIG. 4 shows another scenario , not being part of the invention, which is based on a temporarily limited capability reported by the UE.

The UE is in an idle state, the UE has an initial service or a network-side paging, and the UE initiates an RRC connection. At the same time, the UE wants to use limited UE capabilities, such as insufficient power.

The UE adds the request for the limited capability of the terminal device in MSG3 or MSG5, or uses the MAC CE to carry the request for the limited capability of the terminal device. According to embodiments, a cause that triggers the UE to use the temporarily limited capability of the UE may also be carried, such as interference, insufficient power, overheating, and so on. If the MAC CE is used, the MAC CE itself indicates a request for the use of a limited UE capability, and a corresponding logical channel ID, i.e., an LCID, is defined for the MAC CE. Each bit of the MAC CE corresponds to a cause that triggers the UE to use the temporarily limited UE capability. For example, the first bit (the first bit is in the low order position) indicates insufficient power, the second bit indicates the cause of interference, and the third bit indicates overheating, and so on. If the corresponding cause triggers the UE to send the request, the corresponding bit is set as 1.

The base station sends an instruction to the terminal device to allow the terminal device to use the limited capability, and initiates a UE capability report request. In the UE capability report request message, the base station adds an instruction which requires to report the temporarily limited capability of the UE. Then, the initial UE message.

The UE reports information about at least one temporarily limited capability of the terminal device to the network side. Thereafter, the base station performs initial context establishment and obtains all the static capability information of the UE.

The base station stores the temporarily limited capability information of the UE, and configures a radio resource for the UE according to the obtained limited UE capability information. After that, the process of security activation and radio resource configuration is performed between the base station and the UE.

In the technical solutions of embodiments of the present disclosure, the terminal device requests to use temporarily restricted UE capability information, and then reports the temporarily restricted capability information to the network side, so that subsequent processing is triggered on the network side. Thus, embodiments of the present disclosure can achieve power conservation and interference avoidance for the terminal device.

### Third Embodiment

An embodiment of the present invention provides a terminal device. The terminal device as shown in fig 6 is an example not being part of the invention. As shown in FIG. 6, the terminal device includes a first communication unit 61 and a first process unit 62.

The first communication unit 61 is configured to, when the terminal device needs to limit a capability, send a request for a limited capability of the terminal device to a network side, and receive an instruction from the network side that allows the terminal device to use the limited capability.

The first process unit 62 is configured to send information about at least one type of limited capability to the network side via the first communication unit based on the instruction that allows the terminal device to use the limited capability.

According to an embodiment, the first communication unit 61 is configured to add the request for the limited capability of the terminal device in MSG3 or MSG5;
or,
the first communication unit 61 is configured to carry the request for the limited capability of the terminal device in a Media Access Control (MAC) layer Control Element (CE).

Further, when sending the request for the limited capability, information regarding a cause for the limited capability of the terminal device may also be sent to the network side. For example, the first process unit 62 is configured to carry information regarding a cause for the limited capability of the terminal device in any one of the MSG3, MSG5, and MAC CE.

When setting the cause information for the limited capability in MSG3 or MSG5, a corresponding cause value may be set in a designated field. For example, a cause value of 1 can correspond to insufficient power, and the like. Of course, there can be other cause values and corresponding cause information, and embodiments of the present disclosure do not list all examples.

A data area containing at least one data bit may be set in the MAC CE. Each data bit in the at least one data bit corresponds to information regarding one cause for the limited capability of the terminal device. Based on information regarding a cause for a current limited capability of the terminal device, a target data bit in the data area is set as a target value. That is, the corresponding target data bit is determined based on the cause information, and then the target data bit is set to the corresponding target value. The target value can be set according to actual situations. For example, if the target bit is set to 1, it represents the corresponding cause information.

For example, as shown in FIG. 2, a corresponding logical channel ID, i.e., an LCID, is defined in the MAC CE. Each bit of the MAC CE corresponds to a cause for a UE to temporarily limit the UE's capability. For example, the first bit (the first bit is in the low order position) indicates insufficient power, the second bit indicates the cause of interference, and the third bit indicates overheating, and so on. If the corresponding cause triggers the UE to send the request, the corresponding bit is set as 1.

Further, sending information about at least one type of limited capability to the network side may include various manners:
Manner 1: the first communication unit is configured to carry list information composed of at least one limited capability in MSG5.

That is, a blacklist method is used to report multiple unused capabilities to the network side.

Manner 2: the first communication unit is configured to report information about at least one temporarily limited capability of the terminal device to the network side.

The following provides a detailed description of the solutions provided according to embodiments of the present disclosure with reference to two scenarios provided in FIGs. 3 and 4.

First, referring to FIG. 3, a blacklist-based approach is provided.

The UE is in an idle state, the UE has an initial service or a network-side paging, and the UE initiates an RRC connection. At the same time, the UE hopes to use limited UE capabilities, for example, insufficient power. Thereafter, the UE (i.e., the terminal device) sends an interactive preamble sequence to the network-side base station (gNB), and receives a Random Access Response (RAR) sent by the gNB

The UE adds the request for the limited capability of the terminal device in MSG3; or uses the MAC CE to carry the request for the limited capability of the terminal device. According to embodiments, the cause information that triggers the limited capability of the terminal device may also be carried, such as interference, insufficient power, overheating, and so on.

The network side carries an instruction to allow the terminal device to use the limited capability in the MSG4, or the network side uses the MAC CE to carry an instruction to allow the terminal device to use the limited capability.

The UE carries list information composed of at least one limited capability in MSG5, that is, a blacklist of unused capabilities.

The base station stores the blacklist of the unused capabilities, and then performs the initial UE message and establishing of the initial context, and obtains all the static capability information of the UE.

The base station acquires the temporarily limited capability information of the UE according to the stored blacklist of the unused UE capabilities and the UE's static capability information.

The base station configures a radio resource for the UE according to the obtained limited UE capability information.

If the blacklist reporting method is used, during the movement of the UE, the previous base station forwards the blacklist of the unused UE capabilities and the UE static capability information to the target base station.

FIG. 4 shows another scenario which is based on a temporarily limited capability reported by the UE.

The UE is in an idle state, the UE has an initial service or a network-side paging, and the UE initiates an RRC connection. At the same time, the UE wants to use limited UE capabilities, such as insufficient power.

The UE adds the request for the limited capability of the terminal device in MSG3 or MSG5, or uses the MAC CE to carry the request for the limited capability of the terminal device. According to embodiments, a cause that triggers the UE to use the temporarily limited capability of the UE may also be carried, such as interference, insufficient power, overheating, and so on. If the MAC CE is used, the MAC CE itself indicates a request for the use of a limited UE capability, and a corresponding logical channel ID, i.e., an LCID, is defined for the MAC CE. Each bit of the MAC CE corresponds to a cause that triggers the UE to use the temporarily limited UE capability. For example, the first bit (the first bit is in the low order position) indicates insufficient power, the second bit indicates the cause of interference, and the third bit indicates overheating, and so on. If the corresponding cause triggers the UE to send the request, the corresponding bit is set as 1.

The base station sends an instruction to the terminal device to allow the terminal device to use the limited capability, and initiates a UE capability report request. In the UE capability report request message, the base station adds an instruction which requires to report the temporarily limited capability of the UE. Then, the initial UE message.

The UE reports information about at least one temporarily limited capability of the terminal device to the network side. Thereafter, the base station performs initial context establishment and obtains all the static capability information of the UE.

The base station stores the temporarily limited capability information of the UE, and configures a radio resource for the UE according to the obtained limited UE capability information. After that, the process of security activation and radio resource configuration is performed between the base station and the UE.

In the technical solutions of embodiments of the present disclosure, the terminal device requests to use temporarily restricted UE capability information, and then reports the temporarily restricted capability information to the network side, so that subsequent processing is triggered on the network side. Thus, embodiments of the present disclosure can achieve power conservation and interference avoidance for the terminal device.

### Fourth Embodiment

An embodiment of the present disclosure provides a network device. The network device as shown in fig 7 is an example not being part of the invention. As shown in FIG. 7, the network device includes a second communication unit 71.

The second communication unit 71 is configured to receive a request for a limited capability reported by a terminal device, send to the terminal device an instruction that allows the terminal device to use the limited capability; and receive information about at least one type of limited capability reported by the terminal.

According to an embodiment, the second communication unit 71 is configured to obtain the request for the limited capability of the terminal device in MSG3 or MSG5;
or,
the second communication unit 71 is configured to obtain the request for the limited capability of the terminal device in a Media Access Control (MAC) layer Control Element (CE).

Further, the network device further includes a second process unit 72.

The second process unit 72 is configured to obtain information regarding a cause for the limited capability of the terminal device in any one of the MSG3, MSG5, and MAC CE.

When setting the cause information for the limited capability in MSG3 or MSG5, a corresponding cause value may be set in a designated field. For example, a cause value of 1 can correspond to insufficient power, and the like. Of course, there can be other cause values and corresponding cause information, and embodiments of the present disclosure do not list all examples.

A data area containing at least one data bit may be detected in the MAC CE. Each data bit in the at least one data bit corresponds to information regarding one cause for the limited capability of the terminal device. Based on that a target data bit in the data area is set as a target value, a cause why a capability of the terminal device is limited is determined.

For example, as shown in FIG. 2, a corresponding logical channel ID, i.e., an LCID, is defined in the MAC CE. Each bit of the MAC CE corresponds to a cause for a UE to temporarily limit the UE's capability. For example, the first bit (the first bit is in the low order position) indicates insufficient power, the second bit indicates the cause of interference, and the third bit indicates overheating, and so on. If the corresponding cause triggers the UE to send the request, the corresponding bit is set as 1.

Sending to the terminal device the instruction that allows the terminal device to use the limited capability may include various manners. For example, the second communication unit 71 is configured to carry the instruction that allows the terminal device to use the limited capability in MSG4, and send the MSG4 to the terminal device;
or,
the second communication unit 71 is configured to carry the instruction that allows the terminal device to use the limited capability in the MAC CE and send the MAC CE to the terminal device.

The second process unit 72 is configured to store information about at least one type of limited capability reported by the terminal device; and configure a corresponding radio resource for the terminal device based on the information about the at least one type of limited capability.

Further, if the terminal device moves to a coverage area of a new base station, the information about at least one type of limited capability of the terminal device is sent to the new base station.

As the terminal device moves and enters the coverage of a new base station, a handover procedure may occur. At this time, information about at least one type of limited capability of the terminal device is directly sent to the new base station, which can reduce signaling interaction between the new base station and the terminal device to exchange capability information again to improve processing efficiency.

In the technical solutions of embodiments of the present disclosure, the terminal device requests to use temporarily restricted UE capability information, and then reports the temporarily restricted capability information to the network side, so that subsequent processing is triggered on the network side. Thus, embodiments of the present disclosure can achieve power conservation and interference avoidance for the terminal device.

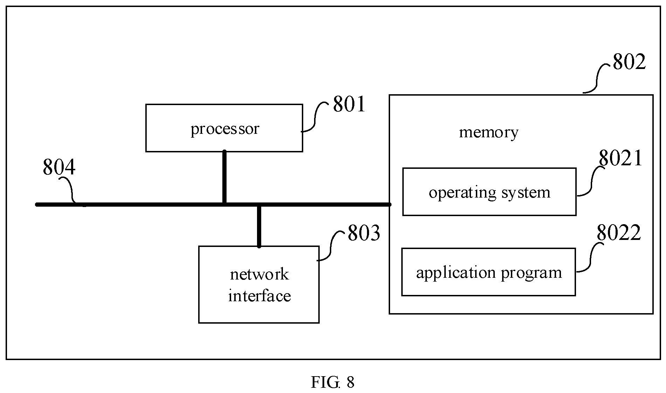

An embodiment of the present disclosure also provides a hardware architecture of a terminal device or a network device not being part of the invention. As shown in FIG. 8, at least one processor 801, a memory 802, and at least one network interface 803 are included. Various components are coupled together via a bus system 804. It can be understood that the bus system 804 is used to implement connection and communication between these components. The bus system 804 includes a power bus, a control bus, and a status signal bus in addition to a data bus. However, for the sake of clarity, various buses are marked as the bus system 804 in FIG. 8.

It can be understood that the memory 802 in the embodiment of the present disclosure may be a volatile memory or a non-volatile memory, or may include both volatile and non-volatile memory.

In some implementations, the memory 802 stores the following elements, executable modules or data structures, or their subsets, or their extended sets:
operating system 8021 and application 8022.

The processor 81 is configured to execute all the method steps described in the First Embodiment or the Second Embodiment, and details are not described herein again.

An embodiment of the present disclosure provides a computer storage medium. The computer storage medium stores computer-executable instructions, and when the computer-executable instructions are executed, the method steps of the foregoing First Embodiment or Second Embodiment are implemented.

In the embodiments of the present disclosure, if the foregoing devices are implemented in the form of software functional modules and sold or used as an independent product, they may also be stored in a computer-readable storage medium. Based on such an understanding, the essence of the technical solutions of the embodiments of the present disclosure or the part of the technical solutions of the embodiments of the present disclosure that contributes to the existing technologies can be embodied in the form of a software product. The computer software product is stored in a storage medium and includes instructions to enable a computer device (which may be a personal computer, a server, or a network device) to execute all or part of the methods described in the embodiments of the present disclosure. The foregoing storage medium includes various media that can store program codes, such as a U disk, a mobile hard disk, a read only memory (ROM), a magnetic disk, or an optical disk. The embodiments of the present disclosure are not limited to any specific combination of hardware and software.

Although the exemplary embodiments of the present disclosure have been disclosed for illustrative purposes, those skilled in the art will recognize that various improvements, additions, and substitutions are also possible, and therefore, the scope of the present disclosure should not be limited to the above embodiments.

## Claims

1. A terminal device capability limiting method, applied to a terminal device, the method being **characterized by** comprising:
when the terminal device needs to initiate an RRC connection and needs to limit a capability, sending (101) a MSG3 in which a request for a limited capability of the terminal device is carried to a network side;
receiving (102) a MSG4 in which an instruction from the network side that allows the terminal device to use the limited capability is carried; and
sending (103) a MSG5 in which information about at least one type of limited capability is carried to the network side based on the instruction that allows the terminal device to use the limited capability.

2. The method according to claim 1, further comprising:
carrying information regarding a cause for the limited capability of the terminal device in any one of the MSG3, and MSG5.

3. The method according to claim 1, wherein sending information about at least one type of limited capability to the network side comprises:
reporting information about at least one temporarily limited capability of the terminal device to the network side.

4. A terminal device capability limiting method, applied to a network device, the method being **characterized by** comprising:
receiving (501) from a terminal device a MSG3 in which a request for a limited capability is carried ;
sending (502) to the terminal device a MSG4 in which an instruction that allows the terminal device to use the limited capability is carried; and
receiving (503) from the terminal a MSG5 in which information about at least one type of limited capability is carried.

5. The method according to claim 4, further comprising:
obtaining information regarding a cause for the limited capability of the terminal device in any one of the MSG3 and MSG5.

6. A terminal device including means configured to perform the method according to any one of claims 1 to 3.

7. A network device including means configured to perform the method according to any one of claims 4 to 5.

## Patentansprüche

1. Verfahren zur Einschränkung der Fähigkeit eines Endgerätes, angewandt auf ein Endgerät, wobei das Verfahren **dadurch gekennzeichnet ist, dass** es Folgendes umfasst:
wenn das Endgerät eine RRC-Verbindung initiieren und eine Fähigkeit einschränken muss, Senden (101) einer MSG3, in der eine Anfrage nach einer eingeschränkten Fähigkeit des Endgerätes übertragen wird, an eine Netzwerkseite;
Empfangen (102) einer MSG4, in der eine Anweisung von der Netzwerkseite, die es dem Endgerät erlaubt, die eingeschränkte Fähigkeit zu nutzen, übertragen wird; und
Senden (103) einer MSG5, in der Informationen über mindestens eine Art einer eingeschränkten Fähigkeit übertragen werden, an die Netzwerkseite basierend auf der Anweisung, die es dem Endgerät erlaubt, die eingeschränkte Fähigkeit zu nutzen.

2. Verfahren gemäß Anspruch 1, das ferner Folgendes umfasst:
Übertragen von Informationen bezüglich einer Ursache für die eingeschränkte Fähigkeit des Endgerätes in einer der MSG3 und MSG5.

3. Verfahren gemäß Anspruch 1, wobei das Senden von Informationen über mindestens eine Art von eingeschränkter Fähigkeit an die Netzwerkseite Folgendes umfasst:
Melden von Informationen über mindestens eine vorübergehend eingeschränkte Fähigkeit des Endgerätes an die Netzwerkseite.

4. Verfahren zur Einschränkung der Fähigkeit eines Endgerätes, angewandt auf ein Netzwerkgerät, wobei das Verfahren **dadurch gekennzeichnet ist, dass** es Folgendes umfasst:
Empfangen (501), von einem Endgerät, einer MSG3, in der eine Anfrage nach einer eingeschränkten Fähigkeit übertragen wird;
Senden (502), an das Endgerät, einer MSG4, in der eine Anweisung, die es dem Endgerät erlaubt, die eingeschränkte Fähigkeit zu nutzen, übertragen wird; und
Empfangen (503), von dem Endgerät, einer MSG5, in der Informationen über mindestens eine Art von eingeschränkter Fähigkeit übertragen werden.

5. Verfahren gemäß Anspruch 4, das ferner Folgendes umfasst:
Erhalten von Informationen bezüglich einer Ursache für die eingeschränkte Fähigkeit des Endgerätes in einer der MSG3 und MSG5.

6. Endgerät, das eine Einrichtung aufweist, die zur Durchführung des Verfahrens gemäß einem der Ansprüche 1 bis 3 ausgebildet ist.

7. Netzwerkgerät, das eine Einrichtung aufweist, die dazu ausgebildet ist, das Verfahren gemäß einem der Ansprüche 4 bis 5 durchzuführen.

## Revendications

1. Procédé de limitation de capacité de dispositif terminal, appliqué à un dispositif terminal, le procédé étant **caractérisé en ce qu'**il comprend les étapes consistant à :
quand le dispositif terminal doit amorcer une connexion RRC et doit limiter une capacité, envoyer (101), à un côté réseau, un MSG3 dans lequel est transportée une demande de capacité limitée du dispositif terminal ;
recevoir (102), en provenance du côté réseau, un MSG4 dans lequel est transportée une instruction qui permet au dispositif terminal d'utiliser la capacité limitée ; et
envoyer (103), au côté réseau, un MSG5 dans lequel est transportée une information concernant au moins un type de capacité limitée, sur la base de l'instruction qui permet au dispositif terminal d'utiliser la capacité limitée.

2. Procédé selon la revendication 1, comprenant en outre l'étape consistant à :
transporter, dans l'un quelconque des MSG3 et MSG5, une information concernant une cause de la capacité limitée du dispositif terminal.

3. Procédé selon la revendication 1, dans lequel l'envoi, au côté réseau, d'une information concernant au moins un type de capacité limitée comprend l'étape consistant à :
signaler, au côté réseau, une information concernant au moins une capacité temporairement limitée du dispositif terminal.

4. Procédé de limitation de capacité de dispositif terminal, appliqué à un dispositif de réseau, le procédé étant **caractérisé en ce qu'**il comprend les étapes consistant à :
recevoir (501), en provenance d'un dispositif terminal, un MSG3 dans lequel est transportée une demande de capacité limitée ;
envoyer (502), au dispositif terminal, un MSG4 dans lequel est transportée une instruction qui permet au dispositif terminal d'utiliser la capacité limitée ; et
recevoir (503), en provenance du terminal, un MSG5 dans lequel est transportée une information concernant au moins un type de capacité limitée.

5. Procédé selon la revendication 4, comprenant en outre l'étape consistant à :
obtenir, dans l'un quelconque des MSG3 et MSG5, une information concernant une cause de la capacité limitée du dispositif terminal.

6. Dispositif terminal, incluant un moyen configuré pour réaliser le procédé selon l'une quelconque des revendications 1 à 3.

7. Dispositif de réseau, incluant un moyen configuré pour réaliser le procédé selon l'une quelconque des revendications 4 et 5.
